# EUROPEAN PATENT SPECIFICATION

(11) **EP 3 907 345 B1**
(45) Date of publication and mention of the grant of the patent: **07.06.2023**
(21) Application number: 20382364.6
(22) Date of filing: 04.05.2020
(51) Int. Cl.: E04F 10/10, E04F 10/02, F16G 1/28

(54) **STICK FASTENING SYSTEM FOR A SLIDING CANOPY IN A PERGOLA TYPE STRUCTURE AND PERGOLA STRUCTURE WITH SLIDING CANOPY**
STANGENBEFESTIGUNGSSYSTEM FÜR EIN VERSCHIEBBARES SONNENDACH MIT PERGOLASTRUKTUR UND PERGOLASTRUKTUR MIT VERSCHIEBBAREM SONNENDACH
SYSTÈME DE FIXATION DE PROFILS POUR UN AUVENT COULISSANT DANS UNE STRUCTURE DE TYPE PERGOLA ET STRUCTURE DE PERGOLA COMPRENANT UN AUVENT COULISSANT

(43) Date of publication of application: 10.11.2021
(73) Proprietor: Gaviota Simbac, S.L., 03630 Sax Alicante (ES)
(72) Inventor: Guillen Chico, Francisco, 03630 Sax (Alicante) (ES); TOLEDO CAMPOS, Francisco, 03630 Sax (Alicante) (ES); Ballester Pérez, Ignacio, 03630 Sax (Alicante) (ES)
(74) Representative: Carlos Hernando, Borja

(56) References cited:
- EP-A1- 2 631 384
- EP-A1- 3 333 335
- EP-A2- 1 964 999
- EP-A2- 1 965 000

## Description

### OBJECT OF THE INVENTION

The present invention, stick fastening system for a sliding canopy in a pergola type structure and pergola structure with sliding canopy, relates to the set of elements making up the fastening system of the sticks of a sliding canopy, particularly of the PVC tensioned canvas type, to a pergola type structure and that enables said canvas to slide for the folding and unfolding thereof, providing speed, ease and safety in the assembly thereof. Likewise, the invention relates to the pergola structure with a sliding canopy that incorporates the above system. Generally, the fastening system comprises for each stick of the canopy, a runner that is fastened to a support piece on one end of a stick and, where appropriate, to an intermediate support piece which makes up joints between stick segments to enable the runner to slide along the beams of the structure in which it is installed and to be able to be pulled by means of a belt fastened at the ends thereof to, at least, a runner of a first stick.

The system is distinguished by comprising: a clip that, housed in a support, clasp or intermediate or joint piece of the stick, facilitates the fastening of the runner to the stick by means of clipping, keeping it in suspension prior to the definitive screwed fixing thereof; said support piece of the stick specifically designed for housing and fixing said clip, which can be manufactured both in plastic and metal material; and a runner provided with a stud with a rib for the coupling thereof to the stick and fastening means of the belt.

The field of application of the present invention falls within the sector of the industry dedicated to the manufacturing of canopies, particularly focussing on those with a pergola type structure and tensioned canvas type canopy, and more specifically to the accessories of the fastening mechanism of the canopy to the structure which enable the sliding thereof for the folding and unfolding thereof.

### BACKGROUND OF THE INVENTION

Sliding type canopies in pergola type structures are known, usually of the type known as PVC tensioned canvas, the fixing system of which comprises in, at least both ends of each one of the several sticks that are incorporated integrally fixed to the canopy in a transverse direction to that of the movement thereof for the folding and unfolding thereof, a runner which has wheels in the upper portion by which it is inserted in a guide of the beam of the structure along which it slides from one end to the other and which exhibits a stud in the lower portion, which stud is fastened to the stick screwed to the cap closing the end of the profile making up said stick, existing at least, one belt that is fixed at the two ends thereof to, at least, one of the runners of a first stick of the canopy, the cross section of which is usually larger, also by means of screwing or nailing, such that said runner serves as a drive runner pulling, by means of motor or manual system to which said belt is coupled, the canopy from one end to the other of the structure.

Thus, the runners that hold the sticks go inside the guides. The belt is hooked to the first runner, transmitting the movement of the motor or manual machine. A PVC canvas is hooked to the first runner and the stick thereof, attached to the rest of the sticks, and when the first runner moves, the stick moves with the canvas and pulls the rest of sticks until it reaches the end of the path, which is when the canvas is tensioned so as not to create water pockets when it rains.

Furthermore, when the canopy is of greater dimensions and consequently the sticks are longer, in addition to the two runners that are fixed to the cap of the respective ends of each stick fastening the canopy to the lateral beams of the structure, one or more intermediate runners are usually included fixed to intermediate joint pieces which fasten the canopy sticks to one or more beams of intermediate points of the structure.

Now, one of the main problems of this type of fastening system is the complexity in the assembly of the canopy to the structure, specially to fix the runners screwed to the sticks, as these are canopies of such dimensions that one single person cannot handle and hold them in order to screw said runners to the sticks, so that the intervention of two or more operators to hold the canopy in an elevated position while said screwed fixings are being performed becomes essential, such that assembly, in addition to a higher staff cost, becomes slower and more complicated.

In order to solve this drawback, some canopies include a clipping system, however, the solution they offer is very limited and therefore it exhibits aspects that can be improved, especially since it is integrated in the cap itself of the stick and consequently doomed to always have to be made of plastic, being one of the objectives of the present invention to provide an improved solution to said problem.

Moreover, a second problem this type of fastening system exhibits is that, in order to fix the ends of the belt to the runner, the belt must be perforated to fix it by screwing or nailing it to the runner, which implies a possible weakening of the belt itself which can reduce the useful life thereof, as it is precisely the point where the drilling takes place where more traction force is applied when it is actuated in order to pull the weight of the canopy. Therefore, it seems necessary to develop an improved fastening system where the need to perforate the belt to fix it by the ends thereof to the runner is removed.

Furthermore, and regarding the current state of the art, it is worth noting that, although as has been explained there are other fastening systems of the type concerned here, relevant stick fastening systems are known from EP3333335A1 corresponding to the preamble of claim 1, EP1965000A2, EP1964999A2 and EP2631384A1.

### DESCRIPTION OF THE INVENTION

The first object of the present invention is a stick fastening system for a sliding canopy in a pergola type structure, according to either of the claims 1-11.

Particularly, the system of the present invention relates to a set of elements making up the stick fastening system of a sliding canopy, preferably of the PVC tensioned canvas type, to the beams of a pergola type structure enabling said canvas to slide for the folding and unfolding thereof, which comprises for, at least each end of each one of the sticks of the canopy, a runner that is fastened to a support piece, which can be a closing support piece on said ends of the stick or an intermediate support piece as a joint between two stick segments, to enable the sliding thereof along the beams of the structure in which it is installed and to be able to be pulled by means of a belt fastened at the ends thereof to, at least, a first runner of a first stick. In contrast with other similar systems currently known, it provides greater ease, speed and safety in the assembly thereof by being based on a clipping system between runners and sticks prior to the definitive fixing thereof by means of screwing and on a coupling system by means of clasps of the ends of the belt to the drive runner.

To that end, and more specifically, said system or mechanism is distinguished by comprising essentially the following:
- at least one runner exhibiting, under sliding elements, a stud with a rib for the coupling thereof to the stick and fastening means of the belt,
- at least one support piece, at least partially introduced in the stick for the fastening thereof in the runner, and exhibiting at least one hole to receive the stud and a housing located under said hole,
- a clip as an independent element of the support piece, arranged in the housing of the support piece, to receive the stud of the runner and secure the fastening of said support piece to said runner by means of the introduction of the rib in the clip.

The support piece can be an end support piece, arranged on the end of a stick or an intermediate support piece serving as an extension or attachment joint between two sticks or stick segments. In the event that it is an end support piece, it exhibits a cover cap covering the open end of the stick wherein said end support piece housing and fixing said clip has been at least partially introduced, said end support piece being able to be manufactured both in plastic and metal material, preferably by injection.

With this, the main advantage provided by the mechanism of the invention is the ease of fixing the sticks to the runners that will have already been incorporated inside the guide. In order to do this, the clip is placed inside the support piece of the stick which, if it is an end piece, can be made of plastic or metal, preferably aluminium. Subsequently, said support piece is inserted in the stud of the runner, these being joined together by means of simple pressure due to the clipping between the clip and the rib of the rod of the runner, which makes possible for the stick to be positioned and in suspension, without the need to place a nut to definitively fix it. This assistance is so that the installer is able to place all the sticks of the canopy in a quick manner and, once placed and in suspension, without the need to be held by another installer or a lift, this is when the safety nuts can be placed and thus fix the support piece to the runner.

Moreover, in the preferred embodiment, the clip is a hollow, annular cylindric piece, into which the stud of the runner penetrates which, in turn, exhibits a special machining that defines the rib that makes the diameter of the rib greater than the hollow of the clip, so that the rib becomes locked in the clip. Likewise, it is important to note that said machined rib is preferably symmetrical, such that the upper and lower shape of the cross section thereof is the same so that the force to adjust or couple, clip, the rib in the clip is the same than to loosen or uncouple the rib from the clip, unclip, that is, to be able to insert and remove the clip retainer.

Furthermore, this solution has the advantage, as mentioned, that the end support piece can be made of metal, preferably aluminium, of an alloy or plastic since the clip is not integrated in the support piece but is an independent element of the same.

Furthermore, in a preferred embodiment, the runner exhibits an upper projection to which the clasps of the belt are coupled, which is a pin with a T-shaped cross section, and which serves to couple respective clasps on both sides made up, in turn, of respective symmetrical pieces exhibiting a recess specifically designed to fit said T-shaped pin and additionally, to tightly fit a section of the ends of the belt that are locked between both of them. Once coupled, both clasps are fixed with adequate closing means, preferably screws.

This solution facilitates the fixing of both ends of the belt in a simple, quick manner and without the need to drill the belts to the runner.

In any case, other retention systems for retaining the belt to the runner are possible.

A second object of the invention is a pergola structure according to claim 12, i.e. with a sliding canopy comprising at least two beams and sticks perpendicular thereto, with at least one runner on each end of each one of the sticks which is inserted in a guide arranged in at least one of the beams to slide said runner along the beam by means of a belt and to move the canopy along the beams, said structure exhibiting a stick fastening system for fastening sticks to the runner as described above, and specifically, a fastening system with:
- at least one runner exhibiting, under sliding elements, a stud with a rib for the coupling thereof to the stick and fastening means of the belt,
- at least one support piece, at least partially introduced in the stick for the fastening thereof in the runner, and exhibiting at least one hole to receive the stud and a housing located under said hole,
- one clip as an independent element of the support piece, arranged in the housing of the support piece, to receive the stud of the runner and secure the fastening of said support piece to said runner by means of the introduction of the rib into the clip, and
- the support piece being a closing support piece that is introduced into an end of a stick closing the end of the profile making up said stick and acting as a cap of the end of said stick.

Additionally, the structure can incorporate another support piece, this being an intermediate support piece, exhibiting two ends and arranged between two independent stick segments which joined together make up a single stick, each one of the two ends of said intermediate support piece being partially introduced into an end of each one of the independent stick segments making up a single stick of greater length, and said intermediate support piece serving as a joint piece between both independent stick segments.

### DESCRIPTION OF THE DRAWINGS

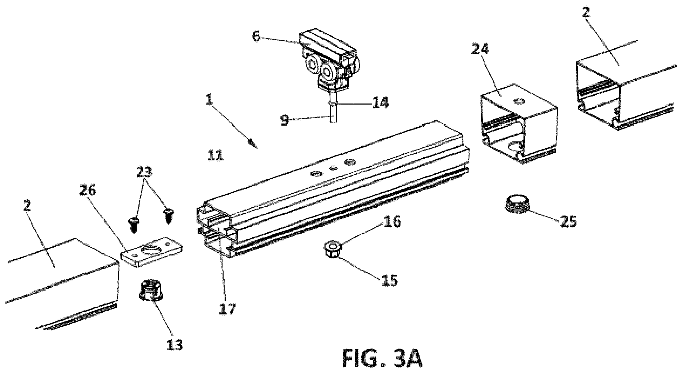

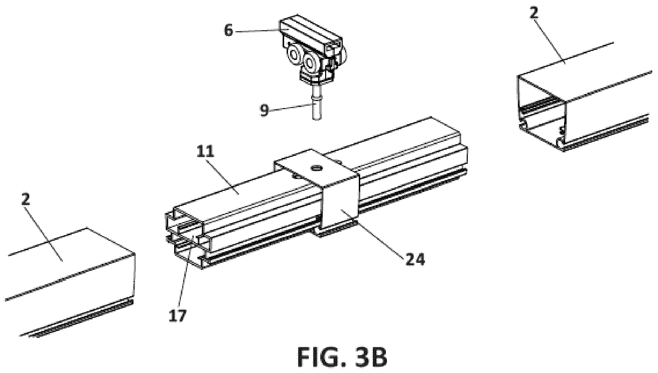

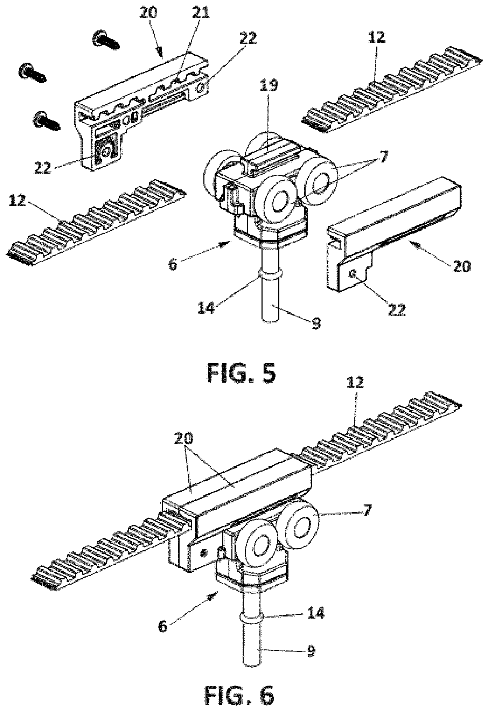

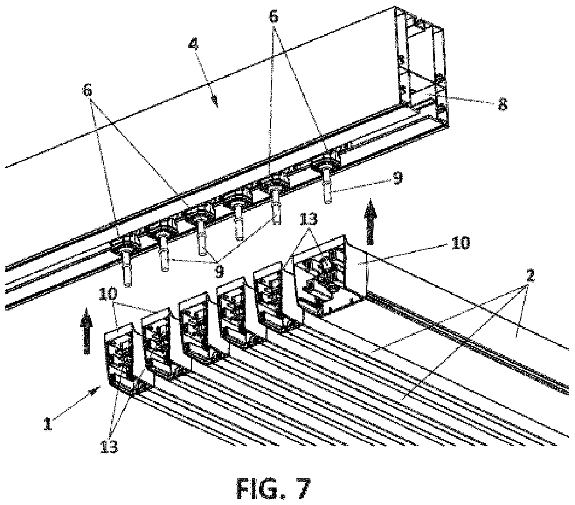

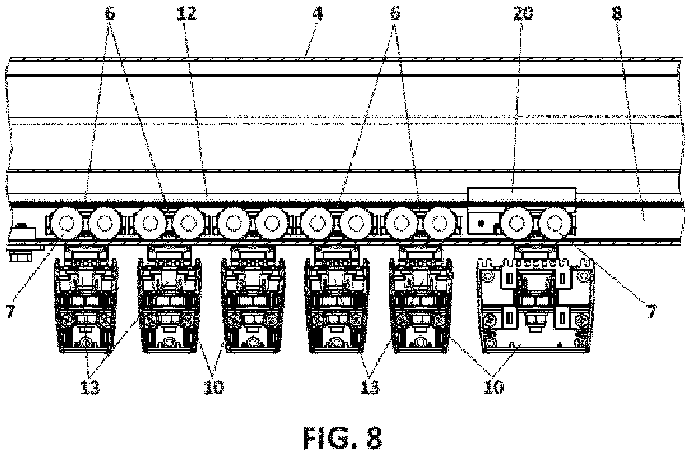

As a complement to the description provided herein, and for the purpose of helping to make the features of the invention more readily understandable, this description is accompanied by a set of drawings constituting an integral part of the same, by way of illustration and not limitation.
Figure 1 shows a schematic view of the pergola type structure with the sticks of the canopy for which the fastening mechanism object of the invention is intended.
Figure 2 shows an exploded schematic view of an example of the fastening mechanism, according to the invention, specifically an example belonging to the fastening of the runner to the cap of the end of a stick, where the main parts and elements it comprises can be seen.
Both Figures 3-A and 3-B show exploded schematic views of another example of the securing mechanism of the invention, in this case belonging to the fastening of the runner to an intermediate joint piece of the stick, the main parts and elements it comprises being appreciated in two assembly steps thereof.

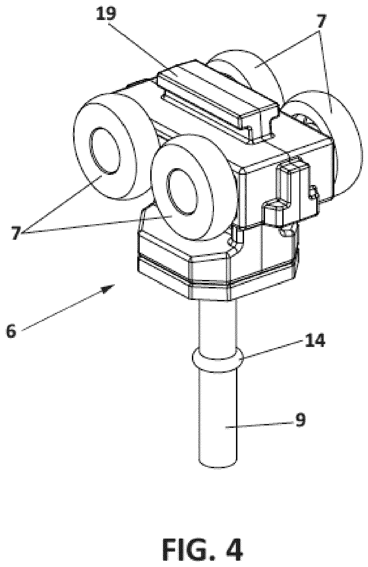

Figure 4 shows a perspective view of the runner comprised by the fastening system according to the invention, the particular configuration thereof being appreciated, especially the rib of the lower rod and the upper projection in the form of T-shaped pin for coupling the clasps of the belt and which have not been represented.
Both Figures 5 and 6 show perspective views, exploded and assembled respectively, of the runner and the clasps fixing the ends of the belt thereto.
Both Figures 7 and 8 show perspective views of a beam of the structure and one of the ends of the sticks of the canopy that are coupled thereto by means of the mechanism of the invention, shown before and after being fixed thereto respectively, the set of elements said mechanism comprises and the arrangement thereof being appreciated, having been represented in Figure 8 with the cross-sectioned beam to more clearly appreciate said arrangement.

### PREFERRED EMBODIMENT OF THE INVENTION

In light of the aforementioned figures, and in accordance with the numbering adopted, a non-limiting exemplary embodiment of the fastening mechanism or system for a sliding canopy in a pergola type structure of the invention can be observed, which comprises what is described in detail below.

Thus, as shown in said figures, the system (1) in question, intended for fastening sticks (2) of a sliding canopy (3) to the beams (4) of a pergola type structure (5), comprises, for at least each end of each one of the sticks (2) of the canopy (3) and, possibly for one or more intermediate attachment points of the segments that the sticks (2) can be divided into, a runner (6) that, provided in the upper portion with sliding elements, such as wheels (7), is inserted in a guide (8) of the beam (4) to slide along the same and has a stud (9) emerging from the lower portion held by a support piece (10, 11), this being able to be an end support piece (10) which closes the end of the profile made up by the stick (2) and, when appropriate, an intermediate support piece (11) serving as an intermediate attachment joint (11) between two independent stick (2) segments, each one of the two ends of said intermediate support piece being partially introduced into an end of each one of the independent stick segments, thus making up a single stick of greater length, and said intermediate support piece serving as joint piece between both independent stick segments. At least one of the runners (6) of a first stick (2) of the canopy (3), is attached to the respective ends of a belt (12) that, by means of a motor or manually, transmits movement to the same.

With this configuration, what sets the system (1) apart is that it comprises a clip (13) inserted as an independent element in the end support piece (10) of the end of the stick (2), and when appropriate, in the joint intermediate support piece (11) of the stick (2), to which the lower stud (9) of the runner (6) is coupled and fixed by means of pressure clipping of a rib (14), which may or may not be symmetrical, provided to that effect in the central portion of said stud (9), keeping the stick (2) in suspension prior to the definitive fixing thereof by means of thread (15) and washer (16), which could be a single element, able to be inserted through the lower end of the stud (9) emerging through the end support piece (10) or the intermediate support piece (11). What further sets the invention apart is that said end support piece (10) for closing the end of the stick (2), which similarly to the intermediate support piece (11) has a housing (17) specifically designed for the tight insertion of the mentioned clip (13), makes it possible to fix the clip (13) correctly positioned for clipping with the stud (9) of the runner (6) without moving, said end support piece (10) being able to be made of plastic or metal material. In order to conceal the exposed end of the stick wherein the end support piece (10) is inserted, a cover cap (18) can be incorporated.

The runner can exhibit different elements or means to be fixed to the belt (12). In the example of the figures, the runner (6), in addition to the mentioned rib (14) of the lower stud (9), is equipped with an upper projection (19) to which fixing clasps (20) are coupled in which the ends of the belt (12) are locked by snap-fitting without perforation. The upper projection (19) of the runner (6) to which the clasps (20) of the belt (12) are coupled is a pin emerging vertically from the upper portion of the runner with a preferably T-shaped cross section configuration on which said clasps (20) are coupled on both sides. Furthermore, by way of example, said clasps (20) are made up of two symmetrical pieces exhibiting, in the inner face whereby they face each other, recesses (21), specifically a lower recess with the shape and dimension of the projection (19) of the runner (6) to fit with said T-shaped pin, and an upper recess with the shape and dimension of the belt (12) to tightly fit a section of the respective ends thereof, such that it is locked between both of them. Additionally, perforations (22) are envisaged in both clasps (20) for inserting fixing screws once both clasps (20) are coupled together and to the runner (6). Figures 5 and 6 clearly show the configuration of said clasps (20) and the arrangement thereof once they are fixed to the runner (6).

Furthermore, in a preferred embodiment, the clip (13) is a cylindrical piece which the stud (9) of the runner (6) penetrates through until it is locked in the rib (14), which, in turn, is determined by a perimeter widening of the diameter of the stud (9). Preferably, said rib (14) is symmetrical, such that it has the same shape above and below so that the clipping force is the same both for the penetration of the rib (14) into the clip (13) as for the removal thereof.

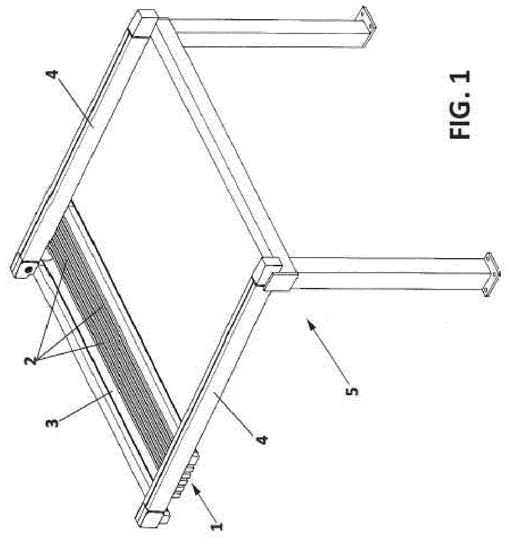

Taking into account Figure 1, a simplified example of the type of structure (5) for which the mechanism (1) of the invention is intended can be schematically seen, wherein the sticks (2) of the canopy (3) fixed at both ends to respective beams (4) have been represented.

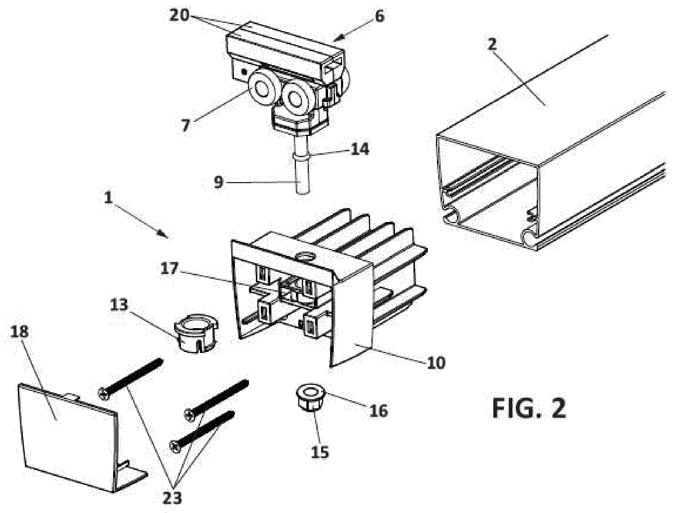

Furthermore, in Figure 2 shows in an exploded view the essential elements comprised by the fastening mechanism (1) of the invention to fix one of the ends of a stick (2) to the beam (4), in other words, the runner (6), the end support piece (10) and the clip (13), the thread (15) and the washer (16) also being appreciated, which could make up a single element, which will definitively fix the stud (9) of the runner (6) and the fixing screws (23) of the end support piece (10) to the profile of the stick (2) and the cover cap (18) covering and embellishing the end support piece (10) fixing the clip (13).

Likewise, taking into account Figures 3-A and 3-B, also exploded views, the elements comprised by the mechanism (1) of the invention to fix the stick (2) to a beam (4) in an intermediate point of the same by means of an intermediate support piece (11) attaching two stick (2) segments can be observed. This solution comprises the runner (6), the intermediate support piece (11), made up of a profile segment that is inserted at both ends in the respective stick segments that the single stick (2) is divided into, and the clip (13), and a hole in the upper surface of the intermediate support piece (11) for the introduction of the stud (9) of the runner (6). Additionally and preferably, the inclusion of an attachment cover or intermediate frame (24) is intended, in which the intermediate support piece (11) is inserted and the upper surface of which is flush with the upper surface of the ends of the stick (2) segments. The attachment cover (24) exhibits in the upper surface thereof, and to allow the introduction of the stud (9) of the runner (6), a hole matching the hole of the upper surface of the intermediate support piece (11).

The intermediate support piece (11) further exhibits a platen (26), arranged in the interior thereof, said platen (26) exhibiting a hole into which the clip (13) is partially introduced prior to the introduction of the platen into the intermediate support piece (11). The hole of said platen (26), and therefore the clip (13) matches the hole arranged in the upper surface of the intermediate support piece (11) and is used for the introduction of the stud (9). This platen (26) serves to fix the position of the clip (13) in the intermediate support piece (11), the platen (26) being fastened to said intermediate support piece (11) by means of screws (23).

Figure 3-B shows said attachment cover (24) once inserted into the attachment piece (11) and with a cap (25) arranged in the lower portion thereof to conceal the thread (15) and the washer (16), which could be a single element, which will definitively fix the stud (9) of the runner (6) to the intermediate support piece (11).

Logically, it is understandable that the same pieces of the mechanism (1) described above can be used for the initial stick (2) or first stick (2) of the canopy, which tends to be of a larger size and for the other sticks (2) which are of smaller size, as can be observed in Figures 7 and 8.

With respect to Figures 4, 5 and 6, a preferred configuration of the elements of the runner (6) can be seen, as well as a preferred configuration of the clasps (20) in which the ends of the belt (12) are locked.

## Claims

1. A stick fastening system for a sliding canopy in a pergola type structure, for fastening the sticks (2) of the canopy (3) to beams (4) of the structure (5), said stick fastening system comprising:
- at least at each end of each one of the sticks (2) a runner (6) which is insertable in a guide (8) arranged in at least one of the beams (4) to slide said runner (6) along the beam (4) by means of a belt (12),
- at least one runner (6) exhibiting, under sliding elements (7), a stud (9) for the coupling thereof to the stick (2) and fastening means (19, 20) of the belt (12),
- at least one support piece (10, 11), at least partially inserted in the stick (2) for the fastening thereof in the runner (6), said piece (10, 11) exhibiting at least one hole to receive the stud (9) and a housing (17) located under said hole,
**characterised in**:
- said stub (9) with a rib (14) for the coupling thereof to the stick (2), and
- a clip (13) as an independent element of the support piece (10, 11), arranged in the housing (17) of said support piece (10, 11), to receive the stud (9) of the runner (6) and ensure the fastening of said support piece to said runner (6) by means of the insertion of the rib (14) in the clip (13).

2. The system, according to claim 1, **characterised in that** the support piece (10), is a closing support piece that is introduced into an end of said stick (2), closing the end of the profile making up said stick (2) and serving as a cap of the end of said stick (2).

3. The system, according to claim 2, **characterised in that** the clip (13) is placed by pressure inside the housing (17).

4. The system, according to claim 1, **characterised in that** the support piece (11) is an intermediate support piece exhibiting two ends and is arranged between two independent stick (2) segments which together make up a single stick (2), each one of the two ends of said intermediate support piece (11) being partially introduced in an end of each one of the independent stick (2) segments making up a single stick of greater length, and said intermediate support piece (11) serving as a joint piece between both independent stick (2) segments.

5. The system, according to claim 4, **characterised in that** the intermediate support piece (11) exhibits a platen (26) arranged in the interior thereof, said platen (26) comprising a hole in which the clip (13) is partially inserted, the hole of said platen (26), and therefore the clip (13), matching another hole arranged on the surface of the intermediate support piece (11) for the introduction of the stud (9).

6. The system, according to any of the preceding claims 4 or 5, **characterised in that** it comprises an attachment cover (24) in which the intermediate support piece (11) is inserted and the upper surface of which is flush with the upper surface of the ends of the segments (2), said attachment cover (24) exhibiting a hole matching the hole of the surface of the intermediate support piece (11).

7. The system, according to any of the preceding claims, **characterised in that** the clip (13) is a cylindrical piece with a through hole into which the stud (9) is introduced until the rib (14) has passed through, the clip (13) thus being locked on the stud (9) and fastened to the runner (6).

8. The system, according to claim 2, **characterised in that** it comprises a cover cap (18) closing the support piece (2) concealing the housing (17) of the clip (13).

9. The system, according to any of the preceding claims, **characterised in that** the intermediate support piece (11) is extruded.

10. The system, according to claim 2, **characterised in that** the closing support piece (10) is injected.

11. The system, according to claim 1, **characterised in that** the support piece (10, 11) is made of metal or plastic material.

12. A pergola structure with a sliding canopy (3) comprising at least two beams (4) and sticks (2) perpendicular thereto, with at least on each end of each one of the sticks (2) a runner (6) which is inserted in a guide (8) arranged in at least one of the beams (4) to slide said runner (6) along the beam (4) by means of a belt (12) and to move the canopy (3) along the beams (4), **characterised in that** it comprises a stick fastening system according to claim 2 for fastening the sticks (2) to the runner (6).

13. The structure, according to claim 12, **characterised in that** it comprises a fastening system according to claim 4.

## Patentansprüche

1. Stangenbefestigungssystem für eine verschiebbare Markise in einer pergolaartigen Struktur zum Befestigen der Stangen (2) der Markise (3) an Balken (4) der Struktur (5), wobei das Stangenbefestigungssystem Folgendes umfasst:
- mindestens an jedem Ende jeder der Stangen (2) eine Kufe (6), die in eine Führung (8) einführbar ist, die in mindestens einem der Balken (4) angeordnet ist, um die Kufe (6) mittels eines Riemens (12) entlang des Balkens (4) zu verschieben,
- mindestens eine Kufe (6), die unter Gleitelementen (7) einen Zapfen (9) für ihre Kopplung mit der Stange (2) und Befestigungsmitteln (19, 20) des Riemens (12) aufweist,
- mindestens ein Stützstück (10, 11), das mindestens teilweise in die Stange (2) eingeführt ist, für deren Befestigung in der Kufe (6), wobei das Stück (10, 11) mindestens ein Loch, um den Bolzen (9) aufzunehmen, und ein unter dem Loch angeordnetes Gehäuse (17) aufweist, **gekennzeichnet durch**:
- den Zapfen (9) mit einer Rippe (14) für seine Kopplung mit der Stange (2), und
- eine Klammer (13) als eigenständiges Element des Stützstücks (10, 11), die dem Gehäuse (17) des Stützstücks (10, 11) angeordnet ist, um den Zapfen (9) der Kufe (6) aufzunehmen und die Befestigung des Stützstücks an der Kufe (6) durch Einführen der Rippe (14) in die Klammer (13) sicherzustellen.

2. System nach Anspruch 1, **dadurch gekennzeichnet, dass** das Stützstück (10) ein Verschlussstützstück ist, das in ein Ende der Stange (2) eingeführt ist, das Ende des die Stange (2) bildenden Profils verschließt und als Kappe für das Ende der Stange (2) dient.

3. System nach Anspruch 2, **dadurch gekennzeichnet, dass** die Klammer (13) in das Gehäuse (17) hineingedrückt wird.

4. System nach Anspruch 1, **dadurch gekennzeichnet, dass** das Stützstück (11) ein Zwischenstützstück ist, das zwei Enden aufweist und zwischen zwei unabhängigen Stangensegmenten (2) angeordnet ist, die zusammen eine einzige Stange (2) bilden, wobei jedes der beiden Enden des Zwischenstützstücks (11) teilweise in ein Ende jedes der unabhängigen Stangensegmente (2) eingeführt ist, die eine einzige Stange größerer Länge bilden, und das Zwischenstützstück (11) als ein Verbindungsstück zwischen den beiden unabhängigen Stangensegmenten (2) dient.

5. System nach Anspruch 4, **dadurch gekennzeichnet, dass** das Zwischenstützstück (11) eine in seinem Inneren angeordnete Halteplatte (26) aufweist, wobei die Halteplatte (26) ein Loch umfasst, in das die Klammer (13) teilweise eingesetzt ist, wobei das Loch der Halteplatte (26) und somit die Klammer (13) mit einem weiteren an der Oberfläche des Zwischenstützstücks (11) angeordneten Loch zum Einführen des Zapfens (9) zusammenfällt.

6. System nach einem der vorhergehenden Ansprüche 4 oder 5, **dadurch gekennzeichnet, dass** es eine Befestigungsabdeckung (24) umfasst, in die das Zwischenstützstück (11) eingesetzt ist und deren obere Oberfläche mit der oberen Oberfläche der Enden der Segmente (2) bündig ist, wobei die Befestigungsabdeckung (24) ein Loch aufweist, das mit dem Loch der Oberfläche des Zwischenstützstücks (11) zusammenfällt.

7. System nach einem der vorhergehenden Ansprüche, **dadurch gekennzeichnet, dass** die Klammer (13) ein zylindrisches Stück mit einem Durchgangsloch ist, in das der Zapfen (9) eingeführt wird, bis die Rippe (14) hindurchgetreten ist, wodurch die Klammer (13) auf dem Zapfen (9) verriegelt und an der Kufe (6) befestigt wird.

8. System nach Anspruch 2, **dadurch gekennzeichnet, dass** es eine das Stützstück (2) verschließende Abdeckkappe (18) umfasst, wobei das Gehäuse (17) der Klammer (13) verdeckt wird.

9. System nach einem der vorhergehenden Ansprüche, **dadurch gekennzeichnet, dass** das Zwischenstützstück (11) extrudiert ist.

10. System nach Anspruch 2, **dadurch gekennzeichnet, dass** das Verschlussstützstück (10) eingespritzt ist.

11. System nach Anspruch 1, **dadurch gekennzeichnet, dass** das Stützstück (10, 11) aus Metall oder Kunststoffmaterial hergestellt ist.

12. Pergolastruktur mit einer verschiebbaren Markise (3), die mindestens zwei Balken (4) und senkrecht dazu verlaufende Stangen (2) umfasst, mit mindestens an jedem Ende jeder der Stangen (2) einer Kufe (6), die in eine in mindestens einem der Balken (4) angeordnete Führung (8) eingesetzt ist, um die Kufe (6) mittels eines Riemens (12) entlang des Balkens (4) zu verschieben und die Markise (3) entlang der Balken (4) zu bewegen, **dadurch gekennzeichnet, dass** sie ein Stangenbefestigungssystem nach Anspruch 2 zum Befestigen der Stangen (2) an der Kufe (6) umfasst.

13. Struktur nach Anspruch 12, **dadurch gekennzeichnet, dass** sie ein Befestigungssystem nach Anspruch 4 umfasst.

## Revendications

1. Système de fixation de tige pour un toit coulissant dans une structure de type pergola, pour la fixation de tiges (2) du toit (3) aux poutres (4) de la structure (5), ledit système de fixation à tiges comprenant :
- au moins à chaque extrémité de chacune des tiges (2) un glisseur (6) qui peut être inséré dans un guide (8) agencé dans l'au moins une des poutres (4) pour faire coulisser ledit glisseur (6) le long de la poutre (4) au moyen d'une courroie (12),
- au moins un glisseur (6) présentant, sous des éléments coulissants (7), un téton (9) pour son accouplement à la tige (2) et aux moyens de fixation (19, 20) de la courroie (12),
- au moins une pièce de support (10, 11), insérée au moins partiellement dans la tige (2) pour sa fixation dans le glisseur (6), ladite pièce (10, 11) présentant au moins un trou pour recevoir le téton (9) et un logement (17) situé sous ledit trou, **caractérisé par** :
- ledit téton (9) avec une nervure (14) pour son couplage à la tige (2), et
- une agrafe (13) en tant qu'élément indépendant de la pièce de support (10, 11), agencée dans le logement (17) de ladite pièce de support (10, 11), pour recevoir le téton (9) du glisseur (6) et assurer la fixation de ladite pièce de support audit glisseur (6) au moyen de l'insertion de la nervure (14) dans l'agrafe (13).

2. Système, selon la revendication 1, **caractérisé en ce que** la pièce de support (10), est une pièce de support de fermeture qui est introduite dans une extrémité de ladite tige (2), fermant l'extrémité du profilé constituant ladite tige (2) et servant de bouchon de l'extrémité de ladite tige (2).

3. Système, selon la revendication 2, **caractérisé en ce que** l'agrafe (13) est placée par pression à l'intérieur du logement (17).

4. Système, selon la revendication 1, **caractérisé en ce que** la pièce de support (11) est une pièce de support intermédiaire présentant deux extrémités et est disposée entre deux segments indépendants de tige (2) qui forment ensemble une seule tige (2), chacune des deux extrémités de ladite pièce de support intermédiaire (11) étant partiellement introduite dans une extrémité de chacun des segments indépendants de tige (2) formant une seule tige de plus grande longueur, et ladite pièce de support intermédiaire (11) servant en tant que pièce de jonction entre les deux segments indépendants de tige (2).

5. Système, selon la revendication 4, **caractérisé en ce que** la pièce de support intermédiaire (11) présente une platine (26) agencée à l'intérieur de celle-ci, ladite platine (26) comprenant un trou dans lequel l'agrafe (13) est partiellement insérée, le trou de ladite platine (26), et donc l'agrafe (13), correspondant à un autre trou agencé dans la surface de la pièce de support intermédiaire (11) pour l'introduction du téton (9).

6. Système, selon l'une quelconque des revendications précédentes 4 ou 5, **caractérisé en ce qu'**il comprend un couvercle de raccordement (24) dans lequel la pièce de support intermédiaire (11) est insérée et dont la surface supérieure affleure la surface supérieure des extrémités des segments (2), ledit couvercle de raccordement (24) présentant un trou correspondant au trou de la surface de la pièce de support intermédiaire (11).

7. Système, selon l'une quelconque des revendications précédentes, **caractérisé en ce que** l'agrafe (13) est une pièce cylindrique avec un trou traversant dans lequel le téton (9) est introduit jusqu'à ce que la nervure (14) soit passée à travers, l'agrafe (13) étant ainsi verrouillée sur le téton (9) et fixée au glissoir (6).

8. Système, selon la revendication 2, **caractérisé en ce qu'**il comprend un capot (18) fermant la pièce de support (2) masquant le logement (17) de l'agrafe (13).

9. Système, selon l'une quelconque des revendications précédentes, **caractérisé en ce que** la pièce de support intermédiaire (11) est extrudée.

10. Système, selon la revendication 2, **caractérisé en ce que** la pièce de support de fermeture (10) est injectée.

11. Système, selon la revendication 1, **caractérisé en ce que** la pièce de support (10, 11) est en métal ou en matière plastique.

12. Structure de pergola à toit coulissant (3) comprenant au moins deux poutres (4) et des tiges (2) perpendiculaires à celles-ci, avec, au moins à chaque extrémité de chacune des tiges (2), un glisseur (6) qui s'insère dans un guide (8) agencé dans l'au moins une des poutres (4) pour faire coulisser ledit glisseur (6) le long de la poutre (4) au moyen d'une courroie (12) et de déplacer le toit (3) le long des poutres (4), **caractérisée en ce qu'**elle comprend un système de fixation de tige selon la revendication 2 pour fixer les tiges (2) au glisseur (6).

13. Structure, selon la revendication 12, **caractérisée en ce qu'**elle comprend un système de fixation selon la revendication 4.
